# EUROPÄISCHE PATENTSCHRIFT

(11) **EP 0 793 244 B1**
(45) Veröffentlichungstag und Bekanntmachung des Hinweises auf die Patenterteilung: **06.10.1999**
(21) Anmeldenummer: 97102213.2
(22) Anmeldetag: 12.02.1997
(51) Int. Cl.: H01G 4/236

(54) **Elektrischer Kondensator**
Electric capacitor
Condensateur électrique

(30) Priorität: 29.02.1996 DE 19607737
(43) Veröffentlichungstag der Anmeldung: 03.09.1997
(73) Patentinhaber: SIEMENS MATSUSHITA COMPONENTS GmbH & CO. KG, 81541 München (DE)
(72) Erfinder: Vetter, Harald, 89520 Heidenheim (DE)
(74) Vertreter: Epping, Wilhelm, Dr.-Ing.

(56) Entgegenhaltungen:
- CH-A- 236 845
- DE-A- 1 564 766

## Beschreibung

Die Erfindung betrifft einen elektrischen Kondensator, insbesondere Leistungskondensator, der in ein gas- und/oder öldicht verschlossenes Gehäuse eingebaut ist, das für die Kondensatoranschlüsse montierbare Durchführungen aufweist, die aus gegen das Gehäuse elektrisch isolierten Metallbolzen sowie Isolatoren zur Erhöhung der Kriechstrecke bestehen, wobei die Isolatoren der Durchführung in das Innere des Gehäuses reichende Abschnitte besitzen, an denen ein Gegenstück befestigt ist, das die Durchführung durch Verspannung mit dem Gehäuse verbindet.

Ein derartiger Kondensator ist aus der älteren EP-Patentanmeldung 96103354.5 bekannt, die unter der Nr. 0731476 veröffentlicht wurde.

Bei dem bekannten Kondensator hat sich herausgestellt, daß die erforderliche Gas- und/oder Öldichtheit unter Umständen nicht bei allen Einsatzbedingungen gewährleistet ist. Dies gilt insbesondere bei kurzen Konstruktionshöhen und wird darauf zurückgeführt, daß das bei der Herstellung der Durchführung angewandte Druckgelierverfahren nicht immer gewährleistet, daß die unterschiedlichen Längenausdehnungskoeffizienten des metallischen, insbesondere aus Messing, bestehenden Metallbolzens und des aus Kunststoff bestehenden Isolators sicher ausgeglichen werden können.

Die vorstehend geschilderten Schwierigkeiten haben zur Folge, daß ein inakzeptabel hoher Ausschuß, insbesondere nach dem Dichtlöten des Kondensatorgehäuses, zustandekommt und damit die Lebensdauer des elektrischen Kondensators wesentlich verkürzt wird.

Aufgabe der vorliegenden Erfindung ist es daher, bei einem elektrischen Kondensator der eingangs genannten Art eine auch unter erschwerten Umweltbedingungen sichere Gas- und/oder öldichtheit zu gewährleisten. Ein Kondensator gemäß dem Oberbegriff von Anspruch 1 ist JP-A-2 283 009 zu entnehmen.

Diese Aufgabe wird erfindungsgemäß durch die im Anspruch 1 angegebenen Merkmale gelöst.

Vorteilhafte Ausgestaltungen des Gegenstandes der Erfindung sind in den Unteransprüchen angeführt.

Die Vorteile des Gegenstandes der Erfindung werden anhand der folgenden Ausführungsbeispiele näher erläutert.

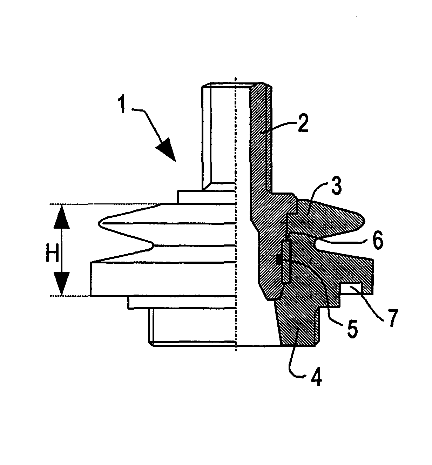

In der dazugehörenden Zeichnung mit einer einzigen Figur ist eine Durchführung 1 dargestellt, die beispielsweise im in der Figur nicht dargestellten Deckel eines metallischen Kondensatorgehäuses eingebaut ist.

Die Durchführung 1 besteht aus einem metallischen Bolzen 2 mit Außengewinde und Durchgangsbohrung, alternativ mit Sackbohrung und gegebenenfalls -gewinde. Der Metallbolzen 2, der vorzugsweise als Messingdrehteil gefertigt ist, wird von einem Isolator 3 umfaßt, der entweder aus Kunstharz (vorzugsweise Epoxidharz) und/oder Silikon (zur Vermeidung von unerwünschten Lunkern mittels Vakuumvergusses und/oder Vakuumentgasung und/oder Druckgelieren hergestellt) oder auch aus Polymerkeramik (in einer adäquaten Verfahrenstechnik verarbeitet) besteht.

Der Isolator 3 besitzt einen in das Innere des (in der Zeichnung nicht dargestellten) Gehäuses reichenden Abschnitt 4 mit angeformten Gewinde. Durch Verschraubung mit einem Gegenstück kann somit die Durchführung 1 in einer entsprechenden Öffnung des Kondensatorgehäuses, beispielsweise des Deckels, verspannt werden. Die erforderliche Abdichtung zwischen Isolator 3 und Kondensatorgehäuse wird beispielsweise durch einen in der Figur nicht dargestellten O-Ring erreicht, der in einer am Isolator 3 angeordneten Ausnehmung 7 angebracht ist.

Bei einer anderen Ausgestaltung ist am Abschnitt 4 kein Gewinde angeformt, und die Verspannung mit dem Gehäuse erfolgt durch ringförmig angeordnete Schrauben.

Es kann die Verspannung aber auch durch eine Verklebung mit dem Gehäuse erfolgen, beziehungsweise können diese Maßnahmen miteinander kombiniert werden.

Zur Behebung der eingangs angeführten Schwierigkeiten bezüglich von Gas- und/oder Öldichtheit ist zwischen Metallbolzen 2 und Isolator 3 ein O-Ring 5 angeordnet, der mit Hilfe einer Kunststoffhülse 6 auf bestimmungsgemäße Dichtfunktion vorgespannt wird. Der Werkstoff der Hülse 6 ist so gewählt (z. B. Epoxidharz, glasfaserverstärktes Kunststoffmaterial), daß das beim nachfolgenden Druckgelierprozess verwendete Material problemlos abbindet bzw. klebt. Wie bereits erwähnt besteht der Isolator 3 und damit auch die Hülse 6 vorzugsweise aus einem Epoxidharz beziehungsweise aus dem Grundwerkstoff des Isolators 3 also einem Duroplast oder einer Polymerkeramik. Es können selbstverständlich aber auch Thermoplast-Werkstoffe oder andere geeignete Kunststoffe für Isolator 3 und Hülse 6 verwendet werden.

Eine weiter Variante besteht darin, daß nach Herstellung des Isolators 3, der somit ausgehärtet vorliegt, gleichzeitig die Hülse 6 mit dem O-Ring-Einstich in den Isolatorwerkstoff homogen integriert, eingeklebt beziehungsweise eingebunden wird. Nach der Herstellung des Isolators 3 existiert somit eine voll funktionsfähige öl- und gasdichte axiale Abdichtung des O-Rings 5.

Bei dieser Variante kann der Bolzen 2 gegebenenfalls auch nach dem Aushärten des Isolatorwerkstoffs montiert werden und eine bleibende drehmomentstabile lebensdauerlange Fixierung an den Isolator 3 mittels einer Verklebung vorgenommen werden.

Sollte nun infolge starker Temperaturwechselbelastung ein Mikroriß entlang der Grenzfläche Metallbolzen 2 und Isolator 3 auftreten, sorgt das elastische Glied aus dem O-Ring 5 nach wie vor für einwandfreie Vakuumdichtheit, insbesondere bei solchen Durchführungen 1, die eine geringe Bauhöhe H aufweisen.

## Patentansprüche

1. Elektrischer Kondensator, insbesondere Leistungskondensator, der in ein gas- und/oder öldicht verschlossenes Gehäuse eingebaut ist, das für die Kondensatoranschlüsse montierbare Durchführungen (1) aufweist, die aus gegen das Gehäuse elektrisch isolierten Metallbolzen (2) sowie Isolatoren (3) zur Erhöhung der Kriechstrecke bestehen, wobei die Isolatoren (3) der Durchführung (1) in das Innere des Gehäuses reichende Abschnitte (4) besitzen an denen ein Gegenstück befestigt ist, das die Durchführung (1) durch Verspannung mit dem Gehäuse verbindet, wobei zwischen Isolator (3) und Metallbolzen (2) ein O-Ring (5) angeordnet ist,
**dadurch gekennzeichnet,**
daß der O-Ring (5) von einer Hülse (6) umgeben ist, und daß der O-Ring (5) mit Hilfe der Hülse (6) auf eine bestimmungsgemäße Dichtfunktion vorgespannt ist.

2. Elektrischer Kondensator nach Anspruch 1,
**dadurch gekennzeichnet,**
daß die Hülse (6) aus demselben Werkstoff wie der Isolator (3) besteht.

3. Elektrischer Kondensator nach einem der Ansprüche 1 oder 2,
**dadurch gekennzeichnet,**
daß die Durchführung (1) durch Formschluß mit dem Gehäuse verbunden ist.

4. Elektrischer Kondensator nach Anspruch 3,
**dadurch gekennzeichnet,**
daß der Formschluß durch Verschraubung und/oder Verklebung hergestellt ist.

5. Elektrischer Kondensator nach Anspruch 3,
**dadurch gekennzeichnet,**
daß der Formschluß durch ringförmig angeordnete Schrauben hergestellt ist.

## Claims

1. Electrical capacitor, in particular power capacitor, which is installed in a casing which is sealed in a gas-tight and/or oil-tight manner and has bushings (1) which can be fitted for the capacitor connections and are composed of metal bolts (2), which are electrically insulated from the casing, and of insulators (3) to increase the creepage distance, in which case the insulators (3) of the bushing (1) have sections (4) which extend into the interior of the casing and on which a mating piece is mounted which connects the bushing (1) to the casing by bracing, with an O-ring (5) being arranged between the insulator (3) and the metal bolt (2),
characterized
in that the O-ring (5) is surrounded by a sleeve (6), and in that the O-ring (5) is prestressed with the aid of the sleeve (6) for a specified sealing function.

2. Electrical capacitor according to Claim 1,
characterized
in that the sleeve (6) is composed of the same material as the insulator (3).

3. Electrical capacitor according to one of Claims 1 or 2,
characterized
in that the bushing (1) is connected to the casing by a positive lock.

4. Electrical capacitor according to Claim 3,
characterized
in that the positive lock is produced by a screw connection and/or by bonding.

5. Electrical capacitor according to Claim 3,
characterized
in that the positive lock is produced by screws arranged in an annular shape.

## Revendications

1. Condensateur électrique, notamment condensateur de puissance, qui est monté dans un boîtier qui est fermé de manière étanche au gaz et/ou à l'huile et qui comporte des traversées qui peuvent être montées pour les bornes du condensateur et qui sont constituées de tiges (2) métalliques isolées du boîtier du point de vue électrique ainsi que l'isolant (3) pour augmenter la ligne de fuite, les isolants (3) de la traversée ayant des tronçons (4) qui vont à l'intérieur du boîtier et auxquels sont fixés une pièce antagoniste qui relie la traversée (1) au boîtier par assujettissement, un joint (5) d'étanchéité torique étant monté entre l'isolant (3) et la tige (2) métallique, caractérisé en ce que le joint (5) d'étanchéité torique est entouré d'une douille (6) et en ce que le joint (5) d'étanchéité torique est précontraint au moyen de la douille (6) pour une fonction d'étanchéité conforme à ce qui est prescrit.

2. Condensateur électrique suivant la revendication 1, caractérisé en ce que la douille (6) est en le même matériau que l'isolant (3).

3. Condensateur électrique suivant l'une des revendications 1 ou 2, caractérisé en ce que la traversée (1) est reliée au boîtier par liaison positive.

4. Condensateur électrique suivant la revendication 3, caractérisé en ce que la liaison positive est produite par vissage et/ou collage.

5. Condensateur électrique suivant la revendication 3, caractérisé en ce que la liaison positive est produite par des vis montées annulairement.
